# EUROPÄISCHE PATENTSCHRIFT

(11) **EP 2 602 033 B1**
(45) Veröffentlichungstag und Bekanntmachung des Hinweises auf die Patenterteilung: **31.10.2018**
(21) Anmeldenummer: 12195414.3
(22) Anmeldetag: 04.12.2012
(51) Int. Cl.: B21D 26/14, B60G 7/00

(54) **Achsteileinheit**
Axle component unit
Dispositif d'élement d'axe

(30) Priorität: 06.12.2011 CH 19262011
(43) Veröffentlichungstag der Anmeldung: 12.06.2013
(73) Patentinhaber: GF Casting Solutions AG, 8200 Schaffhausen (CH)
(72) Erfinder: Löhken, Thomas, 78462 Konstanz (DE)
(74) Vertreter: Fenner, Seraina

(56) Entgegenhaltungen:
- EP-A1- 1 188 644
- EP-A2- 1 431 073
- WO-A1-2013/013918
- DE-A1-102009 040 723
- DE-C1- 19 802 769
- FR-A1- 2 822 104

## Beschreibung

Die Erfindung betrifft eine Achsteileinheit enthaltend ein Achsteil, wobei das Achsteil einen Stutzen zur Aufnahme eines Führungsrohres und ein Führungsrohr aufweist. Eine solche Achsteileinheit ist Bestandteil einer Achse insbesondere einer Hinterachse für einen Anhänger.

Eine bekannte Konstruktion von Achsen besteht darin Führungsrohre direkt an die Längslenker und die Achsschenkel zur Aufnahme der Radträger ebenso an die Längslenker anzuschweissen. Die zu verschweissenden Teile sind in der Regel aus Stahl hergestellt. Mittels eines durchgehenden Verbindungsrohrs, in welches beidseitig ein Führungsrohr mit angeschweisstem Längslenkern und Achsschenkel eingesteckt ist, wird eine Achse gebildet. Nachteilig an einer solchen Achse ist der hohe Zeitaufwand durch das Verschweissen der einzelnen Teile miteinander und dementsprechend die hohen Kosten für die Herstellung einer solchen Achse.

Durch eine Gusskonstruktion kann der Aufwand des Verschweissens eingespart werden, das heisst, dass der Länglenker und der Achsschenkel durch ein Gussteil gebildet werden. Jedoch stellt sich dann das Problem des Anbringens des Führungsrohres, da der hohe Kohlenstoffgehalt des Gussteils eine Schweissung, welche den Anforderungen entspricht so gut wie verunmöglicht.

Die DE 10 2009 019 320 A1 beschreibt eine Verbundlenkerhinterachse bei welcher zwei gegossene Längslenker zur Aufnahme von Radträgern durch ein Querprofil miteinander verbunden sind. Die Verbindung wird durch elektromagnetisches Pulsschweissen erzeugt. Durch das Verschweissen wird unter anderem eine stoffschlüssige Verbindung erzeugt.
Nachteilig daran ist, dass um einen guten Stoffschluss zu erzielen, die Oberflächengüte wie auch die Abmessungen der zu verschweissenden Teile sehr genau sein müssen, wodurch eine Verwendung der Gussteile im Rohzustand verunmöglicht wird. Zudem besteht das hohe Risiko von Rissbildung bei Schweissungen von Gussteilen. Ein weiterer Nachteil besteht darin, dass die Spule um das elektromagnetische Feld für die Schweissung zu erzeugen zweiteilig sein muss, ansonsten läst sich die Achse nach dem Anschweissen des zweiten Längslenkers nicht mehr aus der Spule entfernen, was den Aufbau der Spule verkompliziert. Weitere aus dem Stand der Technik bekannte Verbindungsarten im Fahrzeugbau offenbaren die EP 1 188 644 A1, EP 1 431 073 A2, FR 2 822 104 A1, DE 10 2009 040723 A1 und die WO 2013/013918 A1.

Es ist Aufgabe der Erfindung eine Achsteileinheit und ein damit verbundenes Verfahren vorzuschlagen, welches keine stoffschlüssige Verbringung aufweist und dadurch nachteilige Gefügeveränderungen vermieden werden. Zudem sind die Herstellzeiten für eine Achse zu minimieren und dadurch Kosten einzusparen.

Diese Aufgabe wird erfindungsgemäss dadurch gelöst, dass das Führungsrohr auf dem Stutzen des Achsteils angeordnet ist und durch Umformen rein formschlüssig mit dem Stutzen verbunden wird. Dadurch, dass eine Stoffschlüssigeverbindung vermieden wird, ist es möglich ein Gussteil als Achsteileinheit vorzusehen mit welchem das Führungsrohr verbunden ist, ohne dass das Risiko von Rissbildungen entsteht.

Das Umformen des Führungsrohres wird elektromagnetisch durchgeführt. Der Umformvorgang bzw. Fügevorgang basiert darauf, dass das Material der magnetisch beaufschlagten Komponente, hier das Führungsrohr, über die Streckgrenze hinaus plastisch verformt wird und dadurch einen Formschluss mit dem Stutzen erzielt, ein Stoffschluss ist dabei unerwünscht. Zudem kann auf eine spanende Bearbeitung des Stutzens verzicht werden, da keine hohen Ansprüche an die Oberflächengüte wie auch nicht an die Abmasse der zu verbindenden Teile gestellt sind.
Der Querschnitt des Stutzens weist eine erfindungemässe Form auf, die eine formschlüssige Verbindung zwischen dem Führungsrohr und dem Stutzen ermöglicht. Der Querschnitt ist vorzugsweise polygonförmig, insbesondere ein Vierkant welcher allseitig tailliert ist, wobei die Ecken abgerundete sein können. Genauso eignet sich ein runder Querschnitt. Auch Stutzen, die einen Umfang haben, welche einen wellig verlaufenden Kreisumfang aufweisen, können ebenso eingesetzt werden. Durch die Ausgestaltung der Form des Stutzens kann ein optimaler Formschluss erzeugt werden, der gewährleistet, dass die Verbindung zwischen Stutzen bzw. Achsteil und Führungsrohr den Anforderungen genügt.

Eine erfindungsgemäße Ausführungsform des Stutzens besteht darin den Stutzen konisch zu gestallten.

Die Erfindung erstreckt sich weiterhin auf ein Verfahren zur Herstellung einer entsprechenden Achsteileinheit enthaltend ein Achsteil, wobei das Achsteil einen Stutzen zur Aufnahme eines Führungsrohres und ein Führungsrohr aufweist, wobei das Führungsrohr auf dem Stutzen angeordnet und dort umgeformt wird, so dass ein Formschluss entsteht.

Vorzugsweise wird das Führungsrohr durch elektromagnetisches Umformen durchgeführt, beispielsweise durch Electo Magnetic Formig (EMF).

Die Erfindung zeichnet sich zusätzlich dadurch aus, dass das Achsteil durch Giessen hergestellt wird und dadurch das Achsteil einteilig ist.

Ein Ausführungsbeispiel der Erfindung wird anhand der Figuren beschrieben, wobei sich die Erfindung nicht nur auf das Ausführungsbeispiel beschränkt. Es zeigen:
Fig. 1 einen Längsschnitt durch eine Achsteileinheit auf einer Seite einer Achse eines Anhängers und
Fig. 2 einen Querschnitt durch die Fügestelle des Führungsrohres mit dem Stutzen.

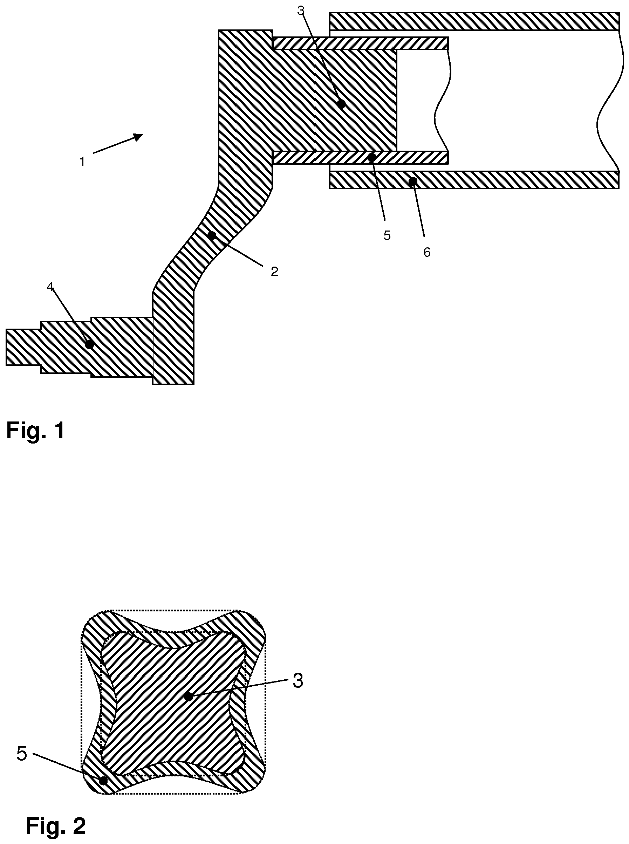

Die in Fig. 1 dargestellte Zeichnung zeigt eine erfindungsgemässe Achsteileinheit 1, welche in das Verbindungsrohr 6 eingeführt ist. Eine Achse, vorzugsweise eine Achse eines Anhängers weist ein Verbindungsrohr 6 auf, an welchem beidseitig eine Achsteileinheit 1 eingesteckt ist. Das Achsteil 2 weist vorzugsweise einen Achsschenkel 4 auf, an welchen ein Radträger zur drehbaren Lagerung des Fahrzeugrads angebracht ist (nicht dargestellt). Das Achsteil 2 weist zudem einen Stutzen 3 auf, welcher zur Aufnahme des Führungsrohres 5 dient. Das Achsteil 2 ist vorzugsweise ein einteiliges Gussteil. Dank der Herstellung des Achsteils 2 durch ein Giessverfahren kann das Achsteil 2 einteilig hergestellt werden, was eine hohe Zeitersparnis bringt im Vergleich mit Achsteileinheiten, welche mehrteilig sind und die Einzelteile zusammengeschweisst werden müssen. Am Stutzen 3 ist das Führungsrohr 5 angeordnet, welches durch Umformen mit dem Stutzen 3 formschlüssig verbunden ist. Wichtig ist dabei, dass kein Stoffschluss benötigt wird, da ein Stoffschluss in Verbindung mit Gussteilen, dadurch dass Gussmaterial einen hohen Kohlenstoffanteil aufweist und spröde Phasen aufweist, zur starken Rissbildung bei Schweissungen neigt. Des Weiteren ist eine spanende Bearbeitung für eine Schweissverbindung zwingend notwendig, da eine gute Oberflächengüte sowie genaue Abmessungen Vorraussetzungen für eine gute Schweissverbindung sind. Das macht bei herkömmlich hergestellten Achsen, welche durch einen Stoffschluss miteinander verbunden sind, eine Bearbeitung des Achsteils zwingend notwendig. Dadurch, dass bei der vorliegenden Erfindung auf einen Stoffschluss verzichtet wird, kann durch die Einsparung der Bearbeitung die Herstellzeit verkürzt werden. Das Umformen bzw. das Fügen des Führungsrohres erfolgt elektromagnetisch vorzugsweise durch Electro Magnetic Forming (EMF). Der Stutzen 3 benötigt keine spanende Bearbeitung nach dem Giessprozess, da keine hohen Anforderungen an die Oberflächengüte wie auch nicht an die Genauigkeit der Abmasse gestellt sind um eine formschlüssige Verbindung zu erzielen. Der Stutzen 3 weist einen Querschnitt auf, der eine formschlüssige Verbindung ermöglicht. Vorzugsweise weist der Stutzen 3 einen polygonförmigen Querschnitt auf, der beispielsweise allseitig tailliert ist, wie in Fig. 2 dargestellt. Das Führungsrohr 5 weist einen Querschnitt auf, durch den ein problemloses aufschieben auf den Stutzen 3 möglich ist. Das heisst, dass das Führungsrohr 5, einen genügend grossen Innendurchmesser aufweist um es auf den unbearbeiteten Stutzen 3 aufzuschieben. Die Form des Querschnitts des Führungsrohres 5 kann dem des Stutzens 3 entsprechend oder auch eine runde Querschnittsform des Führungsrohrs 5 ist denkbar, da durch den Umformvorgang sich das Führungsrohr 5 im Bereich der Fügestelle dem Stutzen 3 optimal anpasst. Als weitere denkbare Form bzw. Kontur des Stutzens 3 wäre die, dass der Umfang des Stutzens 3 einen wellig verlaufenden Kreisumfang aufweist.

Zudem ist der Stutzen 3 konisch ausgebildet. Eine erfindungsgemäße Ausgestaltung besteht darin, dass der Konus des Stutzens in Richtung Achsteil schmaler wird.

Das Verfahren der vorliegenden Erfindung zeichnet sich dadurch aus, dass wie bereits vorab erwähnt, das Achsteil 2 nach dem Giessen nicht nachbearbeiten 3220FEG_EP_4_15122016_Anme!dung.docx werden muss um eine formschlüssige Verbindung mit dem Führungsrohr 5 zu erreichen, welche den geforderten Ansprüchen entspricht. Das auf dem Stutzen 3 angeordnete Führungsprofil 5 wird durch Umformen bzw. Fügen ausschliesslich formschlüssig mit dem Stutzen 3 verbunden. Das Umformen bzw. Fügen wird elektromagnetisch erreicht, vorzugsweise durch Electro Magnetic Forming. Das Achsteil wird vorab durch ein Giessverfahren hergestellt auch andere Verfahren sind bekannt und verwendbar.

Durch das erfindungsgemässe Verfahren besteht die Möglichkeit eine einteilige Spule zur Erzeugung des Elektromagnetfelds vorzusehen. Die Achsteileinheit 1 kann nach dem Umformen bzw. Fügen problemlos aus der Spule herausgezogen werden, da das Umformen nur auf einer Seite des Führungsrohres 5 stattfindet. Zur Bildung der Achse wird das Führungsrohr 5 anschliessend in ein Verbindungsrohr 6 gesteckt, wo kein Umformvorgang mehr stattfindet.

### Bezugszeichenliste

- 1: Achsteileinheit
- 2: Achsteil
- 3: Stutzen
- 4: Achsschenkel
- 5: Führungsrohr
- 6: Verbindungsrohr

## Patentansprüche

1. Achsteileinheit (1) enthaltend ein Achsteil (2), wobei das Achsteil (2) einen Stutzen (3) zur Aufnahme eines Führungsrohres (5) und ein Führungsrohr (5) aufweist, wobei das Führungsrohr (5) auf dem Stutzen (3) des Achsteils (2) angeordnet ist und durch Umformen rein formschlüssig mit dem Stutzen (3) verbunden ist **dadurch gekennzeichnet, dass** der Stutzen (3) konisch mit geringer werdender Querschnittfläche in Richtung Achsteil (2) ausgebildet ist.

2. Achsteileinheit nach Anspruch 1, **dadurch gekennzeichnet, dass** das Achsteil (2) ein einteiliges Gusssteil ist.

3. Achsteileinheit nach Anspruch 1, **dadurch gekennzeichnet, dass** das Achsteil (2) einen Achsschenkel (4) aufweist.

4. Achsteileinheit nach Anspruch 1, **dadurch gekennzeichnet, dass** die formschlüssige Umformung elektromagnetisch erfolgt.

5. Achsteileinheit nach Anspruch 1, **dadurch gekennzeichnet, dass** der Stutzen (3) einen polygonförmigen Querschnitt zur formschlüssigen Verbindung aufweist.

6. Achsteileinheit nach Anspruch 1, **dadurch gekennzeichnet, dass** der Umfang des Stutzens (3) einen wellig verlaufenden Kreisumfang aufweist.

7. Verfahren zur Herstellung einer Achsteileinheit (1) nach einem der Ansprüche 1 bis 6, enthaltend ein Achsteil (2), wobei das Achsteil (2) einen Stutzen (3) zur Aufnahme eines Führungsrohrs (5) und ein Führungsrohr (5) aufweist, **dadurch gekennzeichnet, dass** das Führungsrohr (5) auf dem Stutzen (3) positioniert und dort umgeformt wird, dass eine rein formschlüssige Verbindung zwischen Stutzen (3) und Führungsrohr (5) entsteht.

8. Verfahren nach Anspruch 7, **dadurch gekennzeichnet, dass** die Umformung elektromagnetisch durchgeführt wird.

9. Verfahren nach Anspruch 7, **dadurch gekennzeichnet, dass** das Achsteil (2) einteilig gegossen ist.

10. Achse mit mindestens einer Achsteileinheit nach einem der Ansprüche 1 bis 6.

## Claims

1. Axle component unit (1) comprising an axle component (2), the axle component (2) having a connection piece (3) for receiving a guide tube (5), and having a guide tube (5), the guide tube (5) being arranged on the connection piece (3) of the axle component (2) and being connected to the connection piece (3) in a purely positively locking manner by way of forming, **characterized in that** the connection piece (3) is of conical configuration with a decreasing cross-sectional area in the direction of the axle component (2).

2. Axle component unit according to Claim 1, **characterized in that** the axle component (2) is a single-piece cast component.

3. Axle component unit according to Claim 1, **characterized in that** the axle component (2) has a steering knuckle (4).

4. Axle component unit according to Claim 1, **characterized in that** the positively locking forming takes place in an electromagnetic manner.

5. Axle component unit according to Claim 1, **characterized in that** the connection piece (3) has a polygonal cross section for the positively locking connection.

6. Axle component unit according to Claim 1, **characterized in that** the circumference of the connection piece (3) has a circumference which runs in an undulating manner.

7. Method for producing an axle component unit (1) according to one of Claims 1 to 6, comprising an axle component (2), the axle component (2) having a connection piece (3) for receiving a guide tube (5), and having a guide tube (5), **characterized in that** the guide tube (5) is positioned on the connection piece (3) and is formed there, and **in that** a purely positively locking connection is produced between the connection piece (3) and the guide tube (5).

8. Method according to Claim 7, **characterized in that** the forming is carried out in an electromagnetic manner.

9. Method according to Claim 7, **characterized in that** the axle component (2) is cast in one piece.

10. Axle having at least one axle component unit according to one of Claims 1 to 6.

## Revendications

1. Unité (1) de pièce d'arbre contenant une pièce d'arbre (2), la pièce d'arbre (2) présentant une tubulure (3) qui reprend un tube de guidage (5), et un tube de guidage (5), le tube de guidage (5) étant disposé sur la tubulure (3) de la pièce d'arbre (2) et étant relié à la tubulure (3) purement par déformation en correspondance géométrique,
**caractérisée en ce que**
la tubulure (3) a la configuration d'un cône dont la superficie de la section transversale diminue en direction de la pièce d'arbre (2).

2. Unité de pièce d'arbre selon la revendication 1, **caractérisée en ce que** la pièce d'arbre (2) est une pièce coulée d'un seul tenant.

3. Unité de pièce d'arbre selon la revendication 1, **caractérisée en ce que** la pièce d'arbre (2) présente une aile (4) d'arbre.

4. Unité de pièce d'arbre selon la revendication 1, **caractérisée en ce que** la déformation en correspondance géométrique s'effectue électromagnétiquement.

5. Unité de pièce d'arbre selon la revendication 1, **caractérisée en ce que** la tubulure (3) présente une section transversale de forme polygonale en vue de la déformation en correspondance géométrique.

6. Unité de pièce d'arbre selon la revendication 1, **caractérisée en ce que** la périphérie de la tubulure (3) est une périphérie circulaire ondulée.

7. Procédé de fabrication d'une unité (1) de pièce d'arbre selon l'une des revendications 1 à 6, contenant pièce d'arbre (2), la pièce d'arbre (2) présentant une tubulure (3) qui reprend un tube de guidage (5), et un tube de guidage (5),
**caractérisé en ce que**
le tube de guidage (5) est placé sur la tubulure (3) pour y être déformé de telle sorte qu'une liaison purement en correspondance géométrique s'établisse entre la tubulure (3) et le tube de guidage (5).

8. Procédé selon la revendication 7, **caractérisé en ce que** la déformation est réalisée électromagnétiquement.

9. Procédé selon la revendication 7, **caractérisé en ce que** la pièce d'arbre (2) est coulée d'une seule pièce.

10. Arbre présentant au moins une unité de pièce d'arbre selon l'une des revendications 1 à 6.
